# EUROPEAN PATENT APPLICATION

(11) **EP 2 672 416 A1**
(43) Date of publication of application: **11.12.2013**
(21) Application number: 13170294.6
(22) Date of filing: 03.06.2013
(51) Int. Cl.: G06F 21/32

(54) **Method for providing fingerprint-based shortcut key, machine-readable storage medium, and portable terminal**

(30) Priority: 04.06.2012 KR 20120059792
(71) Applicant: Samsung Electronics Co., Ltd, Gyeonggi-do 443-742 (KR)
(72) Inventor: Kim, Dong-Joon, 443-742 Gyeonggi-do (KR); Park, Jin, 443-742 Gyeonggi-do (KR); Kiml, Jin-Il, 443-742 Gyeonggi-do (KR)
(74) Representative: Nederlandsch Octrooibureau

(57) **Abstract**

A portable terminal provides a fingerprint-based shortcut key to realize both security and one touch convenience. The portable terminal includes a fingerprint sensor for recognizing user's fingerprint, a memory for storing fingerprint data, and a controller for mapping and storing first fingerprint data inputted through the fingerprint sensor and a function of the portable terminal in the memory. Upon input of second fingerprint data through the fingerprint sensor, there is a comparison of the first fingerprint data with the second fingerprint data, and performing the function mapped to the first fingerprint data when the first fingerprint data is identical to the second fingerprint data. The portable terminal may perform the authentication and provide the result to another portable terminal, or an authentication server can perform the comparison.

## Description

### Field of the Invention

The present invention generally relates to a portable terminal and the use of short cuts. More particularly, the present invention relates to using a fingerprint sensor provided in a portable terminal and the portable terminal which implements the method.

### Background to the Invention

Generally, a user input unit that is provided in a portable terminal, which includes wireless terminals such as a mobile communication terminal, includes a keypad. The keypad may have physical keys or be a soft keypad displayed on a touch screen.

User inputs made using the keypad may be classified into two input types: a type in which a user makes a user input by directly pressing a button mounted on a terminal by hand, and a type in which a user makes a user input by using a touch screen. Out of these input types, the input type using the touch screen may be further classified into a soft keyboard input type or a handwriting recognition type. The soft keyboard input type refers to a type in which to overcome portability problems of a general keyboard and a mouse in a portable terminal, an input window in the form of a keyboard is displayed on the touch screen and an input is made by click with a pen or a finger. The handwriting recognition type refers to a type in which handwriting (that is, cursive or non-cursive, a handwritten type) is recognized and converted into a data code.

Inputs made on the portable terminal including the touch screen may include an input for selecting a particular application, such as a call application, a document composition application, etc., through selection of a menu item, and an input for inputting a number, a character, or a special character necessary for executing an operation in the selected application.

General function selection may be performed by making many key input actions requiring pressing many a number of keys, such as by inputting a menu key and selecting a sub item of the menu. However, for a function frequently selected by a user, a rapid and convenient scheme is required.

In the selected application, to execute an operation, by using a soft keyboard displayed on a touch screen miniaturized together with the tendency toward the miniaturization of the portable terminal, the user inputs a phone number for phone call or a character for text message transmission. All keys of the soft keyboard displayed on the screen are very small. Since the user has to press a small button of a keyboard displayed on the miniaturized touch screen, the user may mistakenly press a button near the desired button and thus has to press the desired button again, or accesses an unwanted function, sends out items with misspellings, and can even lock themself out by mistakenly entering a wrong password because of the small key size. Moreover, all keys are displayed as the soft keyboard, limiting miniaturization of the portable terminal.

Furthermore, there are a number of security issues regarding the use of portable terminal, and with the use of such devices with smartphone capabilities that stores passwords, credit and bank card numbers, an electronic wallet, which are certain to increase in importance as the portable terminal increases in importance to the user. There have been a few attempts to increase/provide security which includes a method that provides a security solution based on fingerprints, but a solution capable of providing both security and at the same time enhanced user convenience has not yet been provided. There is a long-felt need in the art for such a solution.

### Summary of the Invention

Accordingly, the present invention provides a method and apparatus that can at least partially solve, minimize, alleviate, or remove at least one of problems and/or disadvantages related to the operation of conventional portable terminals.

The present invention provides a method for providing a fingerprint-based shortcut key which can guarantee security and convenience, and a portable terminal which implements the method.

According to an exemplary aspect, there is provided a portable terminal which provides a fingerprint-based shortcut key, the portable terminal including a fingerprint sensor for recognizing user's fingerprint, a non-transitory memory for storing fingerprint data, and a controller for mapping and storing a first fingerprint data input through the fingerprint sensor and a function of the portable terminal in the memory, and upon input of a second fingerprint data through the fingerprint sensor, comparing the first fingerprint data with the second fingerprint data, and performing the function mapped to the first fingerprint data when the first fingerprint data is identical to the second fingerprint data.

According to another exemplary aspect, there is provided a method for providing a fingerprint-based shortcut key in a portable terminal, the method including receiving input of first fingerprint data from a user, mapping and storing the first fingerprint data and a function of the portable terminal in a memory, receiving input of second fingerprint data from the user, comparing the first fingerprint data with the second fingerprint data, and performing the function mapped to the first fingerprint data if the first fingerprint data is identical to the second fingerprint data.

According to another exemplary aspect, there is provided a computer-readable recording medium having recorded thereon machine executable code for executing the method for providing a fingerprint-based shortcut key in a portable terminal.

### Brief Description of the Drawings

The above and other aspects and advantages of exemplary embodiments of the present invention will become more apparent to the person of ordinary skill in the art from the following detailed description taken in conjunction with the accompanying drawings, in which:
FIG. 1 is a block diagram of a portable terminal according to an exemplary embodiment of the present invention;
FIG. 2 is a diagram showing an exemplary exterior of a portable terminal according to an exemplary embodiment of the present invention;
FIG. 3 is a flowchart showing exemplary operation of a method for setting a fingerprint-based shortcut key according to an exemplary embodiment of the present invention;
FIG. 4 is a diagram showing a function list according to an exemplary embodiment of the present invention;
FIG. 5 is a diagram showing detailed function list according to an exemplary embodiment of the present invention;
FIG. 6 is a diagram showing a detailed function list according to an exemplary embodiment of the present invention;
FIG. 7 is a diagram showing a detailed function list according to an exemplary embodiment of the present invention;
FIG. 8 is a diagram showing a detailed function list according to an exemplary embodiment of the present invention;
FIG. 9 is a diagram showing a detailed function list according to an exemplary embodiment of the present invention;
FIG. 10 is a diagram showing a detailed function list according to an exemplary embodiment of the present invention;
FIG. 11 is a diagram showing a detailed function list according to an exemplary embodiment of the present invention;
FIG. 12 is a diagram showing a detailed function list according to an exemplary embodiment of the present invention;
FIG. 13 is a screen display showing a fingerprint input check window according to an exemplary embodiment of the present invention;
FIG. 14 is a diagram illustrating a fingerprint input direction according to an exemplary embodiment of the present invention;
FIG. 15 is an illustration of an exemplary screen display regarding the execution of an unlock function with fingerprint-based shortcut key input according to an exemplary embodiment of the present invention;
FIGs. 16A and 16B are diagrams illustrating execution of an application execution function with fingerprint-based shortcut key input according to an exemplary embodiment of the present invention;
FIGs. 17A and 17B are diagrams illustrating execution of an application classification function with fingerprint-based shortcut key input according to an exemplary embodiment of the present invention;
FIGs. 18A and 18B are diagrams illustrating execution of a Subscription Identification Module (SIM) card switching function with fingerprint-based shortcut key input according to an exemplary embodiment of the present invention;
FIG. 19 is a diagram illustrating execution of a user account change function with fingerprint-based shortcut key input according to an exemplary embodiment of the present invention;
FIG. 20 is another diagram illustrating execution of a user account change function with fingerprint-based shortcut key input according to an exemplary embodiment of the present invention;
FIG. 21 illustrates an example of functions associated with each fingerprint of a user's hand according to an exemplary embodiment of the present invention.
Fig. 22 illustrates execution of an object insertion function with fingerprint-based shortcut key input associated with Fig. 21 according to a first example of the present invention;
FIGs. 23 and 24 are illustrations of respective functions executed via an object insertion function associated with the fingerprint-based shortcut key input according to a second example of the present invention;
FIG. 25 is a diagram illustrating execution of a personal authentication function with a fingerprint-based shortcut key input according to the first example of the present invention;
FIG. 26 is a diagram illustrating execution of a personal authentication function with a fingerprint-based shortcut key input according to the second example of the present invention;
FIG. 27 is a diagram illustrating execution of a multimedia control function with a fingerprint-based shortcut key input according to the first example of the present invention;
FIG. 28 is a diagram illustrating execution of a multimedia control function with fingerprint-based shortcut key input according to the second exemplary embodiment of the present invention;
FIG. 29 is a diagram illustrating execution of a multimedia control function with fingerprint-based shortcut key input according to a third example of the present invention;
FIG. 30 is a diagram illustrating an input interface change function with fingerprint-based shortcut key input according to an exemplary embodiment of the present invention; and
FIG. 31 is a diagram illustrating a mode change function with fingerprint-based shortcut key input according to an exemplary embodiment of the present invention.

### Description of Embodiments of the Invention

Hereinafter, the present invention may be practiced in various forms and in accordance with one or more exemplary embodiments that may or may be disclosed herein. Exemplary descriptions are described in detail accompanied by illustrations of particular exemplary embodiments shown in the drawings. However, the exemplary description and illustrations do not constitute a limit to claimed scope of the invention, nor the present invention to the particular embodiments, and the preset invention should be construed as including all the changes, equivalents, and substitutions included in the spirit and scope of the present invention.

Although ordinal numbers such as "first", "second", and so forth will be used to describe various components, those components are not limited by the terms, or the order of such terms. The terms are used only for distinguishing one component from another component. For example, a first component may be referred to as a second component and likewise, a second component may also be referred to as a first component, without departing from the teaching of the inventive concept. The term "and/or" used herein includes any and all combinations of one or more of the associated listed items.

The terminology used herein is for the purpose of describing exemplary embodiments only and is not intended to be limiting of exemplary embodiments. As used herein, the singular forms are intended to include the plural forms as well, unless the context clearly indicates otherwise. It will be further understood that the terms "comprises" and/or "has" when used in this specification, specify the presence of stated feature, number, step, operation, component, element, or a combination thereof but do not preclude the presence or addition of one or more other features, numbers, steps, operations, components, elements, or combinations thereof.

Unless otherwise defined, all terms (including technical and scientific terms) used herein have the same meaning as commonly understood by one of ordinary skill in the art to which exemplary embodiments belong. It will be further understood that terms, such as those defined in commonly used dictionaries, should be interpreted as having a meaning that is consistent with their meaning in the specification with the context of the relevant art as understood by the artisan at the time of invention and will not be interpreted in an idealized or overly formal sense unless expressly so defined herein.

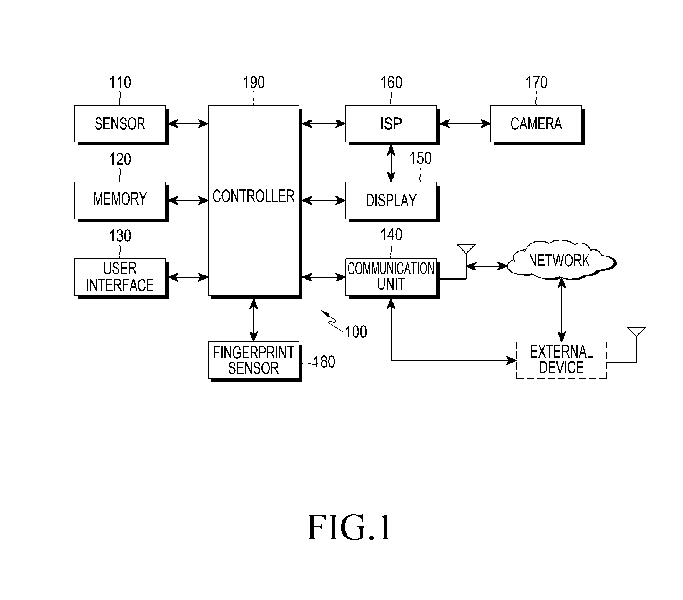

FIG. 1 is a block diagram of a block terminal 100 according to an exemplary embodiment of the present invention.

Referring now to Fig. 1, the portable terminal 100 can include a sensor 110, a memory 120, a user interface 130, a communication unit 140, a display or display unit 150, an Image Signal Processor (ISP) 160, a camera 170, a fingerprint sensor 180, and a controller 190.

The portable terminal 100 can communicate with an external device, or may perform an operation by interworking with the external device. For example, the portable terminal 100 can transmit an image captured by the camera 170 to the external device over a network. In another example, the wireless terminal 100 can permit an access of the external device or an access to internal data through an authentication procedure based on exchange of fingerprint information or unidirectional transmission or reception of the fingerprint information. The portable terminal 100 may operate under control of the external device, or control by the external device may be implemented in various ways. The network may include, but are not in any way limited to, at least one of a Local Area Network (LAN), a Wireless Local Area Network (WLAN), a Wide Area Network (WAN), Internet, and a Small Area Network (SAN). The portable terminal 100 may be directly connected with the external device, and can connect to the external device in a peer-to-peer configuration.

The external device may comprise any arbitrary electronic device, and the portable terminal 100 and the external device may comprise any of, for example, a smart phone, a cellular phone, a game player, a Television (TV), a display device, a vehicle head unit, a notebook, a laptop, a tablet Personal Computer (PC), a Personal Media Player (PMP), a Personal Digital Assistant (PDA), etc., just to name a few non-limiting possibilities. The portable terminal 100 may be implemented as a portable communication terminal having a wireless communication function.

The communication unit 140 comprises hardware such as a transceiver, and is provided for direct connection with external device or connection over a network with the external device, and may be a wired or wireless communication unit. The communication unit 140 may transmit data from the controller 190, the memory 120, the camera 170, and the fingerprint sensor 180 in a wired or wireless manner, or receive data from an external communication line or the air in a wired or wireless manner and forward the data to the controller 190 or store the data in the memory 120.

The communication unit 140 which comprises hardware, may include at least one of a mobile communication module, a WLAN module and/or a Near-Field Communication (NFC) module according to its performance. None of the modules constitute software per se, and some examples may include machine executable code that is loaded into hardware such as a processor, micro-processor or micro-controller to configure such hardware for operation. Examples of the communication unit 140 may include, but not limited to, an Integrated Services Digital Network (ISDN) card, a modem, a LAN card, an infrared port, a Bluetooth port, a Zigbee port, and/or a wireless port.

The mobile communication unit permits the portable terminal 100 to be communicatively coupled and/or connected with the external device by using at least one antenna under control of the controller 190. The mobile communication module transmits/receives a wireless signal for exchanging, or unidirectionally transmitting or receiving data such as an input phone number, or voice call, video call, a Short Messaging Service (SMS) message, a Multimedia Messaging Service (MMS) message, etc., with a cellular phone (not shown) having a network address, a smart phone (not shown), a tablet PC or another device (not shown). As indicated by the cloud, as well as the double-headed arrow, the communication unit and external device may communicate in a number of ways, such as wire, wireless, short range communication, local area network, via the Internet or other network.

The WLAN module, which in this example is part of the communication unit 140, may be connected to the Internet under control of the controller 190 in a place where a wireless Access Point (AP, not shown) is installed. The WLAN module supports a WLAN standard (IEEE802.11x) of the Institute of Electrical and Electronics Engineers (IEEE). The NFC module, which in this example is part of the communication unit 140 can wirelessly perform NFC between the portable terminal 100 and an image forming apparatus (not shown) under control of the controller 190. The NFC may include Bluetooth, Infrared Data Association (IrDA), and so forth.

The user interface 130 receives a user input or provides information to a user, and may include hardware exemplified by but in no way limited to any of a plurality of buttons, a microphone, a speaker, a vibration motor, a connector, a keypad, a touch screen, and so forth. For the user interface 130, a cursor control, such as, but not limited thereto, a mouse, a trackball, a joystick, or cursor direction keys, may be provided to perform information communication with the controller 190 or control cursor movement on the display 150.

With continued reference to the user interface, buttons may be formed on a front surface, a side surface, or a rear surface of the portable terminal 100, and may include a power/lock button (not shown), a volume button (not shown), a menu button, a home button, a back button, and a search button, just to name a few non-limiting possibilities.

In addition, the user interface can include a microphone (not shown) that receives input of voice or sound and generates an electric signal under control of the controller 190. Moreover, the user interface can include a speaker that outputs sound corresponding to various signals (e.g., a wireless signal, a broadcast signal, a digital audio file, a digital moving image file, a captured picture, or the like) to outside the portable terminal 100 under control of the controller 190. The speaker may output sound corresponding to a function executed by the portable terminal 100. A single or multiple speakers may be arranged in a predetermined position or a plurality of predetermined positions of the portable terminal 100.

The vibration motor may convert an electrical signal into mechanical vibration under control of the controller 190. For example, when the portable terminal 100 in a vibration mode receives a voice call from another device (not shown), the vibration motor operates. A single vibration motor or multiple vibration motors may be formed in the portable terminal 100. An artisan also understands and appreciates that piezoelectric or electrorestrictive operation can be used. The vibration motor may operate in response to a user's touch on the touch screen and continuous movement of the touch on the touch screen.

A connector may be used as power interface or communication interface for connecting the portable terminal 100 with the external device or a power source (not shown). Under control of the controller 190, through a wired cable connected to the connector, data stored in the memory 120 of the portable terminal 100 may be transmitted to the external device or data may be received from the external device. For example through the wired cable connected to the connector, power may be input from a power source or a battery may be charged. Wireless charging of the battery is also within the spirit and scope of the claimed invention.

When the user interface constitutes a keypad (not shown), such a keypad may receive a key input from the user under control of the portable terminal 100. The keypad may include a physical keypad formed in the portable terminal 100 or a virtual keypad displayed on the touch screen.

The sensor 110 may include one or more sensors for detecting a state (position, azimuth, motion, etc.) of the portable terminal 100. For example, the sensor 110 may include a proximity sensor for detecting user's proximity to the portable terminal 100 or a motion sensor for detecting a motion (e.g., rotation, acceleration, deceleration, vibration, etc.) of the portable terminal 100. The senor may comprise a Hall effect sensor, just to name one non-limiting possibility. The motion sensor may include an acceleration sensor, a gravity sensor, a shock sensor, a Global Positioning System (GPS), a compass sensor, etc. The sensor 110 may detect a state of the portable terminal 100, generate a signal corresponding to the detection of the state, and transmit the generated signal to the controller 190. For example, a GPS module may receive electric waves from a plurality of GPS satellites (not shown) around the earth's orbit and calculate the position of the portable terminal 100 by using a time of arrival from the GPS satellite (not shown) to the portable terminal 100.

The camera 170 preferably includes a lens system, a driving unit, and an image sensor, and may further include a flash or the like. The camera 170 converts an optical signal that is input (or captured) through the lens system into an electric image signal or data and outputs the signal or data, and the user may capture a moving image or still image using the camera 170. In other words, the camera 170 forms an optical image of an object and detects the formed optical image as an electric signal.

The lens system forms the image of the object by converging light incident from outside. The lens system may include a convex lens or an aspheric lens. The lens system has symmetry with respect to an optical axis which passes through a center thereof, and the optical axis is defined as a central axis. The image sensor detects the optical image formed by external light that is incident through the lens system as the electric image signal.

The image sensor may include a plurality of pixels arranged in an MxN matrix, and each pixel may include a photodiode and at least one transistors. The pixel accumulates an electric charge generated by incident light (that is, an exposure process), and a voltage based on the accumulated electric charge indicates an illuminance of the incident light (that is, an image data output process). When an image forming a still image or moving image is processed, image data output from the image sensor includes a set of voltages (that is, pixel values) output from the pixels, and the image data indicates one image (that is, a still image). The image includes MxN pixels. The image sensor may be a Charge-Coupled Device (CCD) image sensor, a Complementary Metal-Oxide Semiconductor (CMOS) image sensor, just to name some non-limiting possible.

The driving unit comprises hardware such that drives the image sensor under control of the ISP 160 or the controller 190. The driving unit exposes all pixels of the image sensor or only pixels of a region of interest among all pixels of the image sensor according to a control signal received from the ISP 160 or the controller 190, and image data output from the pixels is output to the ISP 160.

The display 150 displays an image input from the ISP 160 or the controller 190 on the screen. The display 150 may use a Liquid Crystal Display (LCD), a touch screen, or the like. The touch screen displays an image based on control of the controller 190, and upon touch of a user input means such as a finger or a stylus pen touches on the surface of the user input means, a key touch interrupt is generated, and user input information including input coordinates and an input state is output to the controller 190 under control of the controller 190.

The touch screen may provide a Graphic User Interface (GUI) corresponding to various services (e.g., call, data transmission, broadcasting, picture/moving image capturing) to the user. The touch screen may transmit user input information corresponding to at least one touch input to the GUI to the controller 190. The touch screen may receive at least one touch through a user's body (e.g., a finger including a thumb) or a touch-possible input means (e.g., a stylus pen). The touch screen may receive continuous movement of one of the at least one touch. The touch screen may transmit user input information corresponding to the received continuous movement of the touch to the controller 190. Gesture recognition can also be used.

In the present invention, the touch may include a contactless (e.g., a detectable distance of, for example, 1mm or less between the touch screen and the user's body or the touch-possible input means) touch as well as a contact between the touch screen and the user's body or the touch-possible input means. The touch screen may be of, for example, a resistive type, a capacitive type, an infrared type, or an acoustic wave type.

The memory 120 can store machine executable code comprising applications of various functions such as video communication, games, etc., images for providing a GUI related to the applications, user information, documents, fingerprint information/data, databases related to mapping tables of fingerprints and functions, background images (a menu screen, a standby screen, etc.) or operation programs necessary for driving the portable terminal 100, and images captured by the camera 170.

The memory 120 is a non-transitory machine-readable medium which may be defined as a medium for providing data and/or executable code that are loaded into a processor which executes the particular function associated with the data and/or executable code to allow the portable terminal to execute a particular function. The memory 120 may be a non-volatile medium or a volatile medium, such as RAM. Such a medium needs to be of a tangible type so that commands delivered to the medium can be detected by a physical tool which reads the commands with the machine.

The machine-readable medium may include, but not limited to, at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), and a flash EPROM.

Upon sensing a touch of a user's finger on the surface of the fingerprint sensor 180, the fingerprint sensor 180 generates fingerprint data corresponding to a fingerprint pattern of the finger (or fingers) pressed on or provided within a distance that the finger markings can be detected by the sensor. The finger sensor 180 may have a switch structure, and may generate press sensing data corresponding to a user's pressing, that can include, for example, a roll angle, finger pitch, pressure etc. The fingerprint sensor 180 outputs the generated fingerprint data and/or press sensing data to the controller 190. For example, the fingerprint sensor may generate an excitation signal, and sense a current change of a response signal to the excitation signal according to a touch of a user's finger having conductivity on the surface of the fingerprint sensor 180 by using a pixel antenna array, thus generating fingerprint data.

The controller 190 may recognize a user's fingerprint pattern from fingerprint data received from the fingerprint sensor 180, and may sense movement of a series of fingerprint patterns. In other words, the controller may recognize a user's fingerprint input direction, recognized by using a general motion estimation technique. For example, the movement of person's finger about the fingerprint sensor, in addition to or in lieu of the actually pattern on the finger.

Alternatively, the fingerprint sensor 180 may sense a user's fingerprint input direction to generate fingerprint input direction data, and output the generated fingerprint input direction data to the controller 190. In other words, the fingerprint data may include fingerprint pattern information and fingerprint input direction information.

The controller 190 executes an application corresponding to user input information, and the application executes a program operation corresponding to the user input information. The user input may include an input made through the keypad or the touch screen or a camera-based input. The controller 190 can include, for example, a bus for information communication and a processor connected with the bus for information processing. The controller 190 can also include a second memory, such as a cache (e.g., a RAM) which is connected with the bus to store information required by the processor. The second memory may be used to store temporary information required by the processor. The portable terminal 100 may further include a ROM connected with the bus to store static information required by the processor. The controller 190, as a central processing device, controls the overall operation of the portable terminal 100 and performs a method for setting a fingerprint-based shortcut key and an operation corresponding to an input of a fingerprint-based shortcut key according to the present invention. The ISP 160 processes an image input from the camera 170 or an image stored in the memory 120 in frame units under control of the controller 190, and outputs an image frame converted to fit for screen characteristics (size, display quality, resolution, etc.) of the display 150. The ISP 160 may control the driving unit to expose only pixels of a particular region of interest. The ISP 160 may be integrated into the controller 190.

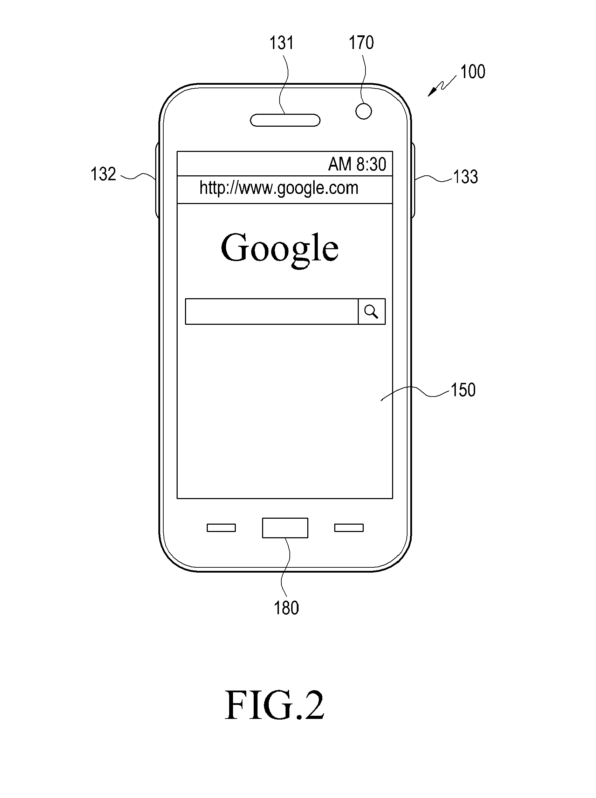

FIG. 2 is a diagram showing schematic exterior of the portable terminal 100 according to an exemplary embodiment of the present invention.

In FIG. 2, the display 150 on the front surface of the portable terminal 100, the speaker 131 and the camera 170 disposed above the display 150, and the fingerprint sensor 180 disposed under the display 150 are shown. In this particular example, a volume button 132 is disposed on a side surface of the portable terminal 100, and a power button 133 is disposed on another side surface of the portable terminal 100.

The fingerprint sensor 180 may be configured to perform a fingerprint recognition function, a function of a home button generally provided in the portable terminal 100, and a direction key function together. A separate home button may also be disposed above, under, or beside the fingerprint sensor 180. Hereinafter, the fingerprint sensor 180 is used as the home button.

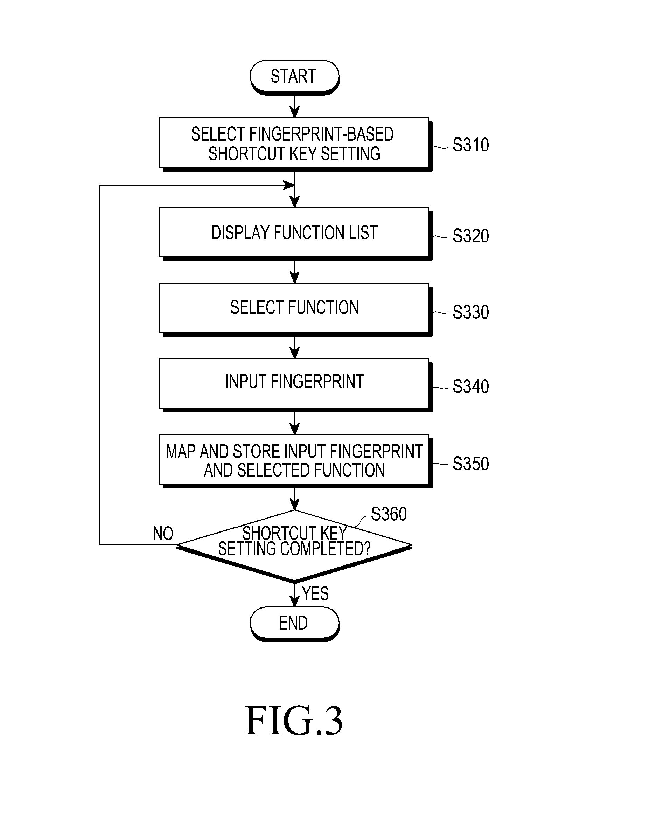

FIG. 3 is a flowchart showing an exemplary operation of a method for setting a fingerprint-based shortcut key according to an exemplary embodiment of the present invention. This method is performed by the controller 190 or by controlling other components by the controller 190.

In step S310, the portable terminal senses selection of a fingerprint-based shortcut key setting function. In the present invention, function selection may be performed by a touch on a function menu/icon displayed on the display 150, a voice input, a gesture, and so forth, some or all of which are recognized by the controller of the portable terminal. In the present invention, a function or item may be interchangeably used with a menu.

In step S320, the controller 190 controls the display unit to displays a list of functions for which fingerprint-based shortcut keys can be set to the user.

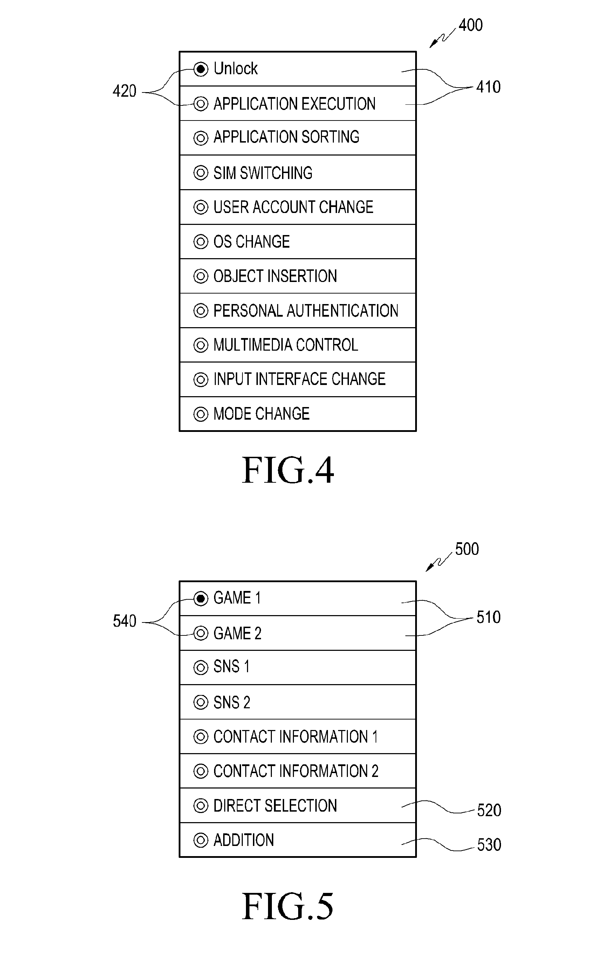

FIG. 4 is a diagram showing one possible non-limiting example of a function list according to an exemplary embodiment of the present invention. An exemplary function list 400 shows terminal function items 410 for which fingerprint-based shortcut keys can be set by the user or be provided as a default, and the user may select a desired function item by selecting or releasing a button 420. The user may select the particular function item by simply touching that item. The function list 400 may include, for example, an unlock function, an application execution function, an application sorting function, an SIM switching function, a user account change function, an Operating System (OS) change function, an object insertion function, a personal authentication function, a multimedia control function, an input interface change function, and a mode change function. These functions may have a plurality of detailed functions. An artisan can also appreciate that there can be a set of changeable default functions that can be activated by the user merely registering their fingerprint into the device. For less technically adept persons, or users that are very unfamiliar with a new device but want to begin usage quickly, having them register their fingerprints and then looking at a guide to see what functions, as a changeable default, can be executed by each particular finger print or a combination thereof, can prove to be quite advantageous.

With regard to the exemplary list of functions, the unlock function refers to a function of releasing lock through fingerprint input. The application execution function refers to a function of executing a game application, a Social Network Service (SNS) application, a document composition application, a multimedia application, or the like, or executing a phone application, a message application, or the like to automatically connect to preset contact information. The application sorting function refers to a function of directly accessing a game folder which collects game applications, an SNS folder which collects SNS applications, a location-based service folder which collects location-based applications, a document folder which collects working documents, and so forth. The SIM switching function refers to a function of selecting one of a plurality of SIM cards installed in the portable terminal 100. The user account change function refers to a function of selecting one of a plurality of user accounts. The OS change function refers to a function of selecting one of a plurality of OSs. The object insertion function refers to a function of inputting preset sentence, phrase, image, etc., into a document composition application such as a word application, a message application, etc. The personal authentication function refers to a function of, upon receiving an authentication request from another portable terminal or an authentication server, transmitting authentication information such as fingerprint information, a message, an alarm, or the like to the another portable terminal or authentication server. The multimedia control function refers to a function of displaying a control menu, such as a volume control menu, a play menu, etc., or a function of executing multimedia control such as volume control (volume up, volume down, mute), rewind, fast forward, pause, play, etc. The input interface change function refers to a function of changing an input interface such as, for example, a Korean character input interface, an English character input interface, a symbol input interface, and so forth, during execution of the document composition application. The mode change function refers to a function of changing a normal mode into an edition mode. In response to a selection a function item having detailed functions (e.g. sub-functions or various detailed functions under the category of the function item), a list of detailed functions is displayed to the user.

FIGs. 5, 6, 7, 8, 9, 10, 11 and 12 examples of various detailed function lists according to an exemplary embodiment of the present invention.

Referring now to FIG. 5, a detailed function list 500 of the application execution function may display function items 510 of two game applications (application 1 and application 2), two SNS applications (SNS 1 and SNS2), and two contact information (contact information 1 and contact information 2). Once the user selects a direct selection item 520 by using a button 540, then a window for allowing the user to select an application to be executed is displayed when the user executes a fingerprint-based shortcut key. When the user selects an "addition" item 530, the user may directly search for and select a function to be displayed in the detailed function list 500. The user may arbitrarily configure the detailed function list 500 by separate button input. An artisan understands that the buttons in this example are virtual and selected via touch or near touch (as disclosed before regarding a stylus or finger within a predetermined distance of the display, such as, for example 1mm).

The detailed function list 500 may display a preset number of applications or contact information having high frequency of use or a preset number of applications or contact information recently used. The contact information may be that registered in a phone directory stored in the memory 120 or that recorded in a communication history stored in the memory 120.

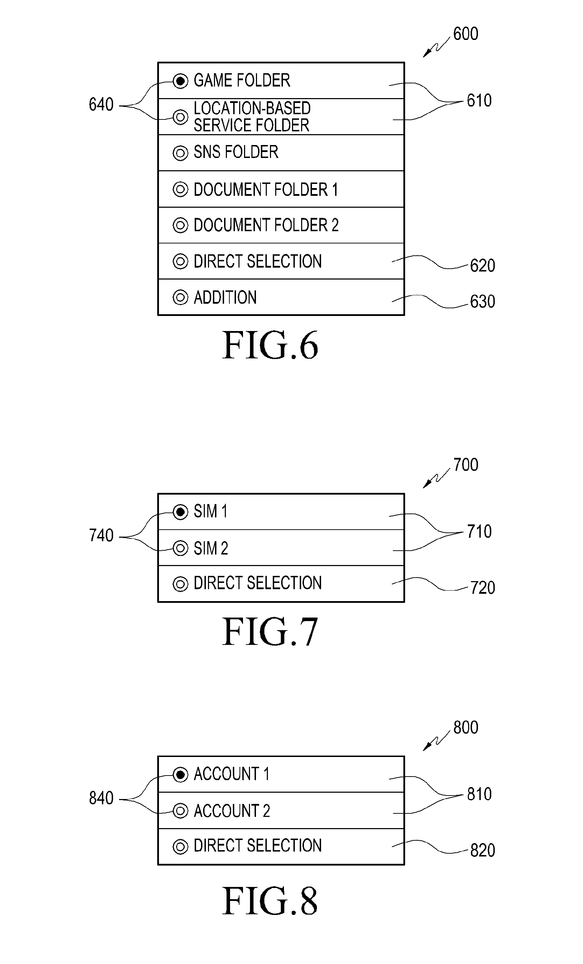

Referring now to FIG. 6, a detailed function list 600 of the application sorting function may display function items 610 of a game folder, a location-based service folder, an SNS folder, and two document folders (document folder 1 and document folder 2). The detailed function list 600 may also display a direct selection item 620 and an addition item 630, as mentioned above, and buttons 640 for selecting items or releasing the selection.

Referring now to FIG. 7, a detailed function list 700 of the SIM switching function may display function items 710 of the two SIM cards (SIM 1 and SIM 2). The first SIM (SIM 1) and the second SIM (SIM 2) are previously mounted on the portable terminal 100, and for example, the first SIM (SIM 1) may be used for private use, and the second SIM (SIM 2) may be used for business use. Through SIM card switching, the user may simply change a phone number of the portable terminal 100. The detailed function list 700 may also display a direct selection item 720 and buttons 740 for selecting items or releasing the selection, as described above.

Referring now to FIG. 8, a detailed function list 800 of the user account change function may display function items 810 of two user accounts (account 1 and account 2). For example, the first account (account 1) may be used for a first user, and the second account (account 2) may be used for a second user. Through the account change, the single portable terminal 100 may be used by multiple users, or the single user may simply change environment setting of the portable terminal 100 (use environment setting of a wireless network, use environment setting of voice and video calls, use environment setting for a situation-based sound, and use environment setting for a screen such as a style of type displayed on the screen, the brightness of the screen, etc.). The detailed function list 800 may display a direct selection item 820 and buttons 840 for selecting items or releasing the selection, as described above.

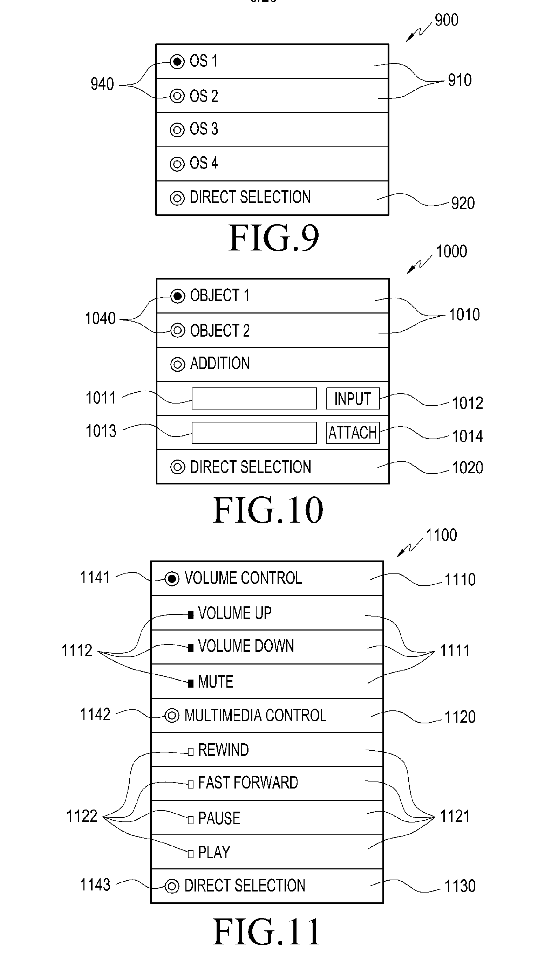

Referring now to FIG. 9, a detailed function list 900 of the OS change function may display function items 910 of four OSs (OS 1, OS 2, OS 3, and OS 4). For example, the first through fourth OSs (OS 1, OS 2, OS 3, and OS 4) may correspond to, for example, Android, Windows, Linux, and Apple OS, respectively. The detailed function list 900 may display a direct selection item 920 and buttons 940 for selecting items or releasing the selection, as described above. Again, it should understood and appreciated that all of FIGs. 5 through 12 are examples provided for purposes of illustration, and do not limit the scope of the appended claims.

As shown in FIG. 10, a detailed function list 1000 of the object insertion function may display function items 1010 of two objects (object 1 and object 2). For example, the first object and the second object (object 1 and object 2) may correspond to a text and an image, respectively. When the user selects the "addition" item, an object to be displayed on the detailed function list 1000 may be directly input by the user using an input window 1011 and/or an input button 1012, or may be searched for and attached by using a path display window 1013 and/or an attachment button 1014. The detailed function list 1000 may display a direct selection item 1020 and buttons 1040 for selecting items or releasing the selection, as described above.

Referring now to FIG. 11, a detailed function list 1100 of the multimedia control function may display a volume control function item 1110 including volume up function, volume down function, and mute function items 1111 and a multimedia control function item 1120 including rewind, fast forward, pause, and play function items 1121. For example, the user selects all detailed functions of the volume control function by using a button 1141 or check boxes 1112, such that when the user executes a fingerprint-based shortcut key later, a window for allowing the user to execute detailed functions of the volume control function may be displayed. For example, by selecting one of detailed functions of the multimedia control function using a button 1141 or a check box 1112, when the user executes a fingerprint-based shortcut key later, the selected detailed function of the volume control function may be directly executed. The detailed function list 1100 may display a direct selection item 1130 and a button 1143 for selecting the direct selection item 1130 or releasing the selection, as described above.

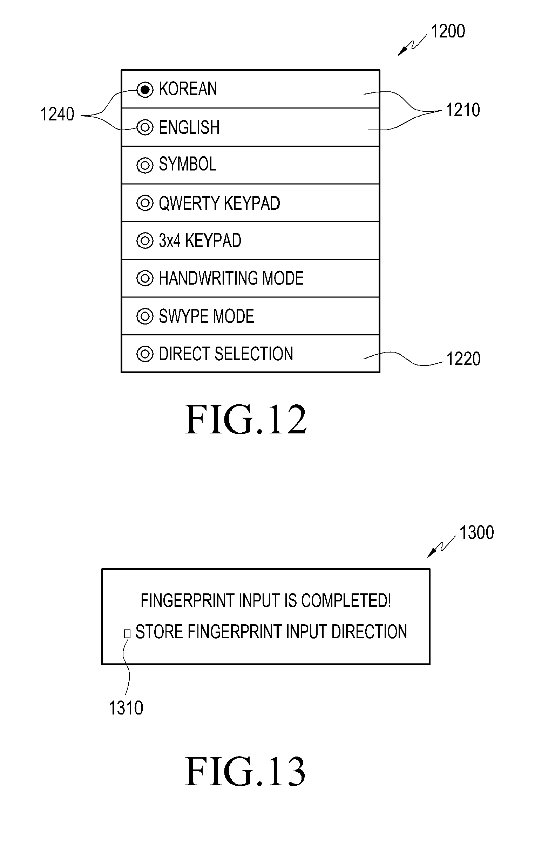

Referring now to FIG. 12, a detailed function list 1200 of the input interface change function may display function items 1210 of a Korean character input interface, an English character input interface, a symbol input interface, a qwerty keypad, a 3x4 keypad, a handwriting mode, and a Swype mode. The detailed function list 1200 may also display a direct selection item 1220 and buttons 1240 for selecting items or releasing the selection, as described above.

Referring back to FIG. 3, in step S330, the controller 190 selects a function to be set by a fingerprint-based shortcut key in response to receiving information from the user interface 130 or the fingerprint sensor 180.

In step S340, the controller 190 controls output of a display window for guiding fingerprint input to the user, and once the user inputs a fingerprint to the fingerprint sensor 180, the controller 190 notifies the user of completion of the fingerprint input and receives user's determination of whether to store a direction of the fingerprint input. For a particular function, the controller 190 may automatically store a fingerprint input direction even if the user does not designate storage of the fingerprint input direction.

FIG. 13 is a diagram showing a fingerprint input check window 1300 according to an exemplary embodiment of the present invention. As shown in FIG. 13, on the fingerprint input check window 1300, the user may determine whether to store a fingerprint input direction by selecting a check box 1310 or releasing the selection. In other words, the user may map only a fingerprint or both the fingerprint and a fingerprint input direction to a particular function.

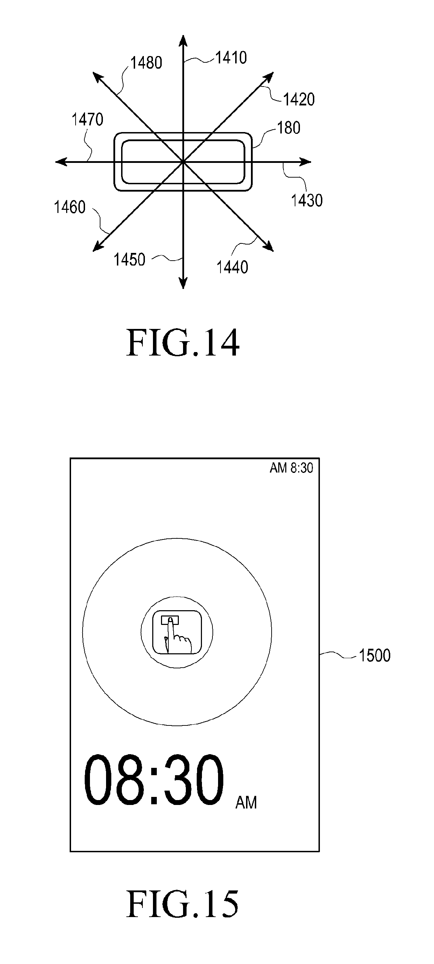

FIG. 14 is a diagram for describing a fingerprint input direction according to an exemplary embodiment of the present invention. As shown in FIG. 14, the fingerprint input direction may be classified and stored as a 0° direction 1410, a 45° direction 1420, a 90° direction 1430, a 135° direction 1440, a 180° direction 1450, a 225° direction 1460, a 270° direction 1470, and a 315° direction 1480. The fingerprint input direction may be simply classified and stored as a horizontal direction or a vertical direction, or as a 0° direction, a 90° direction, a 180° direction, and a 270° direction.

In step S350, the controller 190 maps and stores the user-selected function and the fingerprint input by the user in association with the function, and optionally, the fingerprint input direction. In other words, the controller 190 may store a plurality of data sets including functions, fingerprint data, and fingerprint input directions, which are related to one another, in the form of a table in the memory 120.

In step S360, the controller 190 checks whether the user has completed setting of the fingerprint-based shortcut key, and if not, the controller 190 re-performs step S320.

The user may set shortcut keys based on his/her ten fingers or fingerprints of some of them, or combinations of them, and may also different shortcut keys based on input directions of a fingerprint of one finger.

FIG. 15 is an illustration of an exemplary display screen for execution of the unlock function with fingerprint-based shortcut key input according to an exemplary embodiment of the present invention.

The user turns on a screen illumination of the portable terminal 100 by pressing the power button 133 or the home button 180, or by waving their hand in front of the screen, or by shaking or moving the portable terminal with a particular motion, and then inputs a fingerprint to the finger sensor 180 on a shown locked screen 1500, thus unlocking the screen 1500.

The locked screen 1500 may also be unlocked by inputting the fingerprint together with one of drag, drawing pattern input, and password input, or voice command.

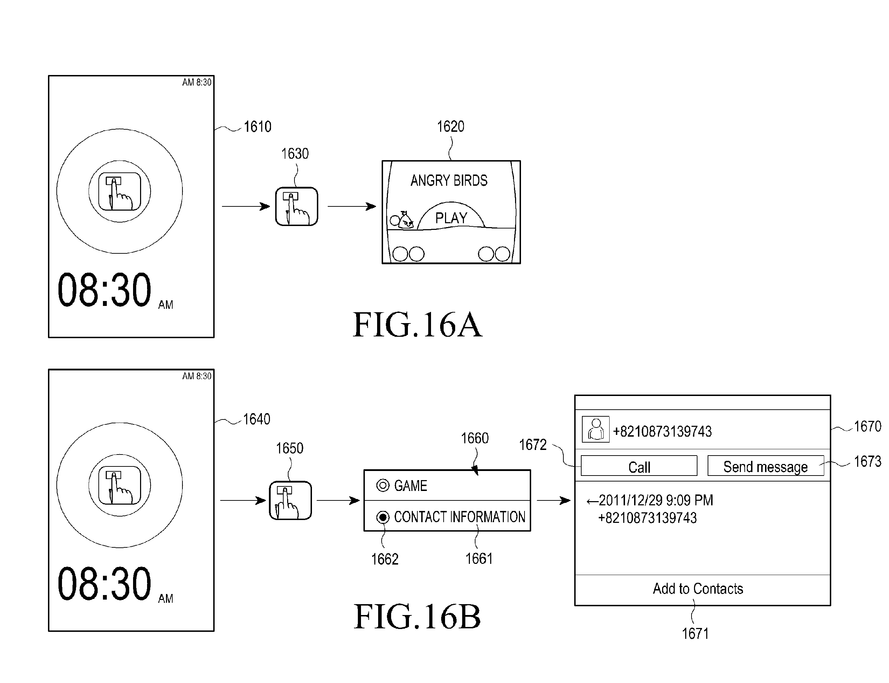

FIGs. 16A and 16B illustrate execution of an application execution function with fingerprint-based shortcut key input according to an exemplary embodiment of the present invention.

Referring now to FIG. 16A, the user inputs a fingerprint of the right index finger on a locked screen 1610 as indicated by 1630, thus executing a preset game 1620, which in this example happens to be "Angry Birds".

Referring now to FIG. 16B, the user inputs a fingerprint of the right middle finger on a locked screen 1640 as indicated by 1650, such that a detailed function list 1660 is displayed and the user selects a desired function item 1661 to execute a detailed function. In this example, when the user selects a contact information item 1661 between game and contact information items by using a button 1662, a communication application 1670 which displays a button 1671 for storing contact information, a button 1672 for call connection, and a button 1673 for message transmission is executed. Unlike in this example, when the user selects the contact information item 1661, a call connection may be automatically performed through the communication application 1670. The contact information may be recently received contact information, and if the communication type of the contact information is a call, the communication application 1670 may automatically perform call connection; if the communication type of the contact information is a message, the communication application 1670 may automatically display a message input window.

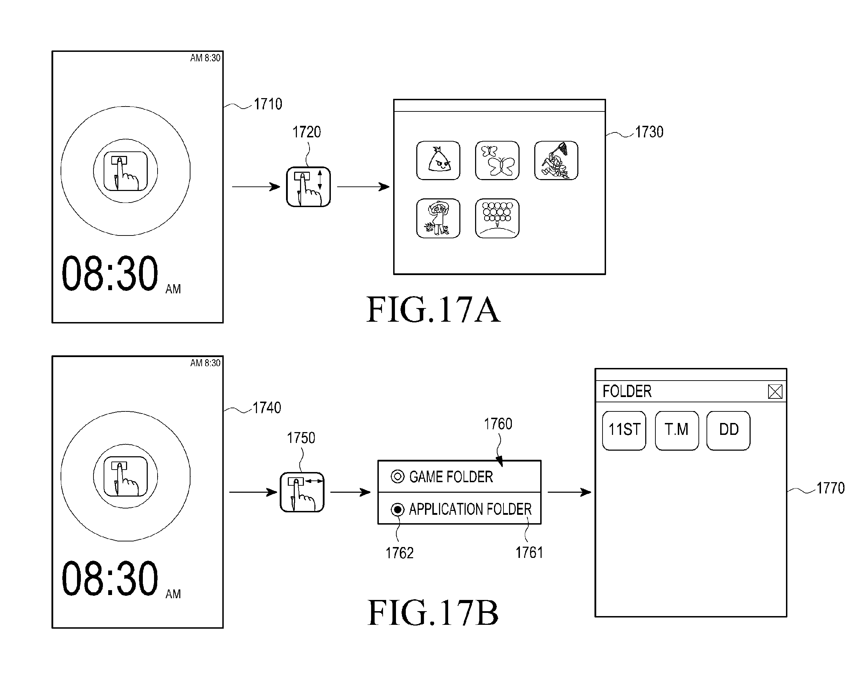

FIGs. 17A and 17B illustrate execution of an application sorting function with fingerprint-based shortcut key input according to an exemplary embodiment of the present invention.

Referring now to FIG. 17A, the user inputs a fingerprint of the right index finger in a vertical direction on a locked screen 1710 as indicated by 1720, a game folder 1730 which collects game applications is displayed. Unlike in this example, when a home screen includes a plurality of pages and game applications are sorted on a fourth page of the home screen, the user may move to the fourth page of the home screen upon the fingerprint input.

Referring now to FIG. 17B, the user inputs the fingerprint of the right index finger in a horizontal direction on a locked screen 1740 as indicated by 1750, such that a detailed function list 1760 is displayed and the user selects a desired function item 1761 to execute a detailed function.

In this example, when the user selects an application folder 1761 between a game folder and the application folder 1761 by using a button 1762, a folder 1770 which collects web sites (or web pages) is displayed. In the present invention, the folder 1770 may be a folder of an arbitrary type, for example, a new folder in which shortcut icons added to the home screen can be inserted, a contact information folder which shows all names registered in contact information, a Bluetooth received folder which collects files received using Bluetooth communication, a favorites folder which shows names registered as favorites in contact information, or a recent document folder which collects recently worked documents in the document composition application.

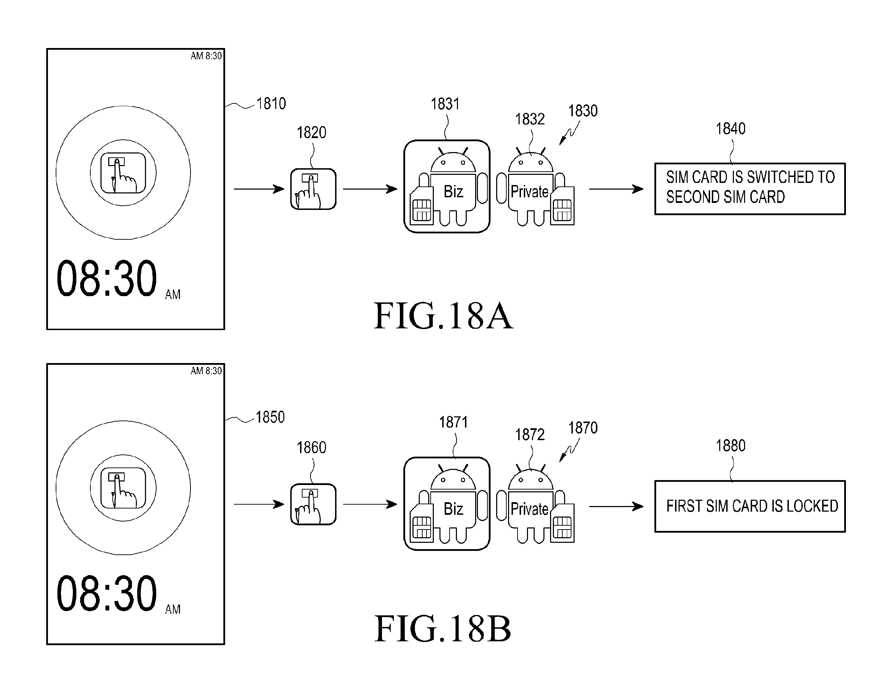

FIGs. 18A and 18B illustrate execution of an SIM card switching function with fingerprint-based shortcut key input according to an exemplary embodiment of the present invention.

Referring now to FIG. 18A, the user inputs a fingerprint of the right ring finger on a locked screen 1810 as indicated by 1820, such that an SIM card list 1830 showing items 1831 and 1832 as images is displayed, and the user selects the desired SIM card items 1831 and 1832 to switch an SIM card. In this example, the first SIM card item 1831, which is currently used for business, is emphasized as a square box and when the user selects the second SIM card item 1832 for private use, a window 1840 notifying the user that the SIM card is switched to the second SIM card is displayed.

Referring now to FIG. 18B, the user inputs a fingerprint of the right ring finger on a locked screen 1850 as indicated by 1860, such that an SIM card list 1870 showing items 1871 and 1872 as images is displayed, and the user selects the desired SIM card items 1871 and 1872 to switch a SIM card. In this particular example, the first SIM card item 1871 which is currently used for business is emphasized as a square box and when the user selects the first SIM card item 1871, a window 1880 notifying the user that the first SIM card is locked is displayed. Once the SIM card is locked, the portable terminal 100 can be used by inputting a password or a preset fingerprint when power is turned off and then turned on again (that is, the portable terminal 100 is rebooted).

Unlike in this example, when the user inputs a preset fingerprint, locking or unlocking of a currently used SIM card may be executed.

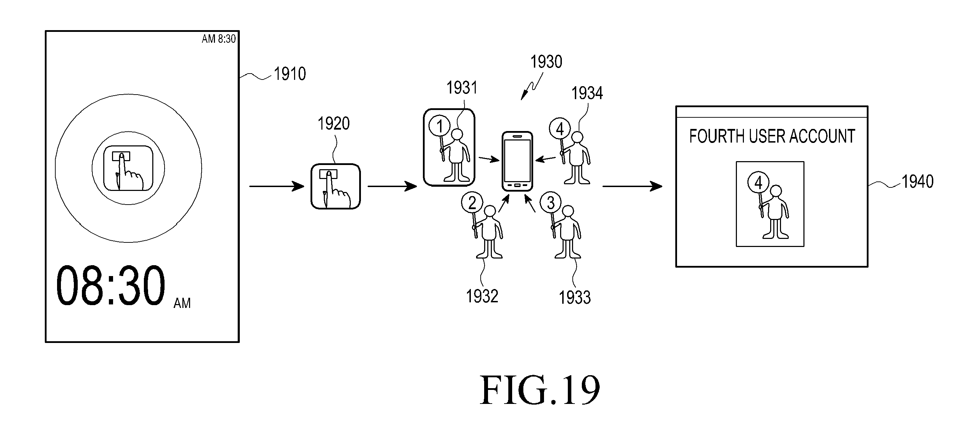

FIG. 19 illustrates execution of a user account change function with fingerprint-based shortcut key input according to an exemplary embodiment of the present invention.

The user inputs a fingerprint of the right index finger on a locked screen 1910 as indicated by 1920, such that a user account list 1930 showing items 1931 to 1934 as images is displayed and the user selects a desired user account to change a user account. In this example, a currently used first user account item 1931 is emphasized, and when the user selects a fourth user account item 1934, the portable terminal 100 is rebooted with a fourth user account and a window 1940 indicating so is displayed.

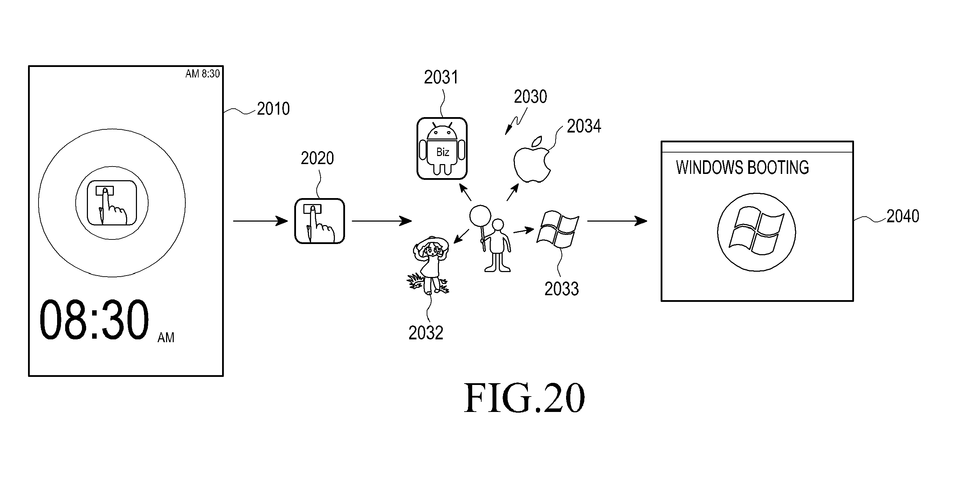

FIG. 20 illustrates execution of a user account change function with fingerprint-based shortcut key input according to an exemplary embodiment of the present invention.

The user inputs a fingerprint of the right index finger on a locked screen 2010 as indicated by 2020, such that a window showing items 2031 to 2034 as images is displayed and the user selects desired OS items 2031 to 2034 to change an OS. In this example, the currently used first OS item 2031 (e.g., Android) is emphasized as a square box and once the user selects the third OS item 2033, the portable terminal 100 is rebooted with the third OS and a window 2040 indicating so is displayed.

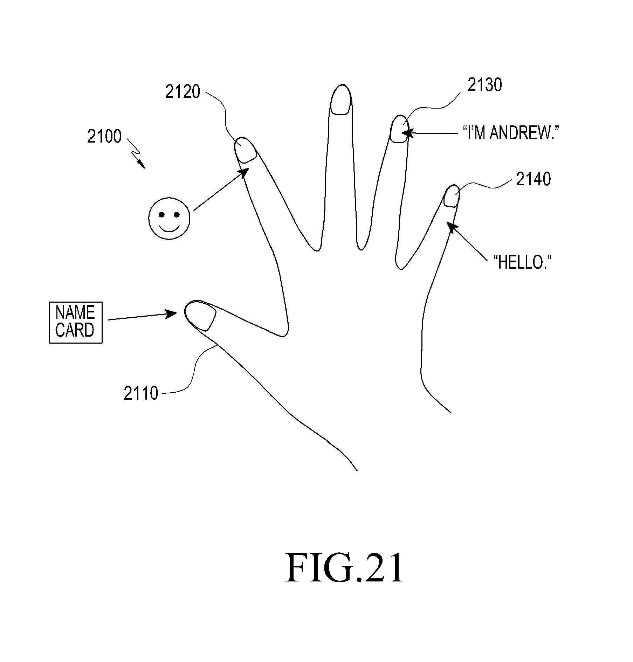

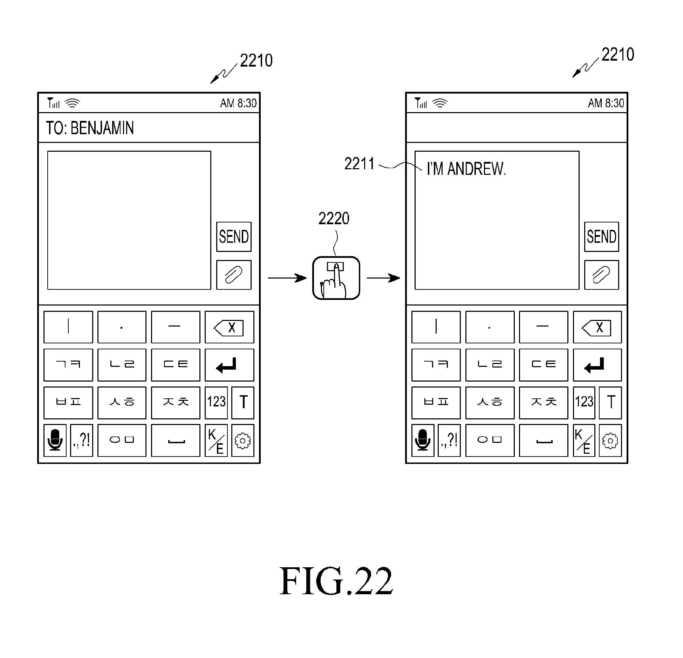

FIGs. 21 and 22 illustrate execution of an object insertion function with fingerprint-based shortcut key input according to a first example of the present invention.

Referring to FIG. 21, which is an exemplary depiction of a right hand and the functions associated with each finger print, to execute the document composition application, a name card image, an emoticon, a sentence "I'm Andrew", and a sentence "Hello." are mapped to a thumb fingerprint 2110, an index-finger fingerprint 2120, a ring-finger fingerprint 2130, and a little-finger fingerprint 2140 of a right hand 2100. The document composition application may be a memo application, Facebook, Twitter, a chatting application, or the like.

Referring to FIG. 22, which shows the execution of right ring-fingerprint 2130 from FIG. 21 during execution of a document composition application 2210, the user inputs a fingerprint 2130 of the right ring finger as indicated by 2220, such that the sentence "I'm Andrew." is input to a message input window 2211.

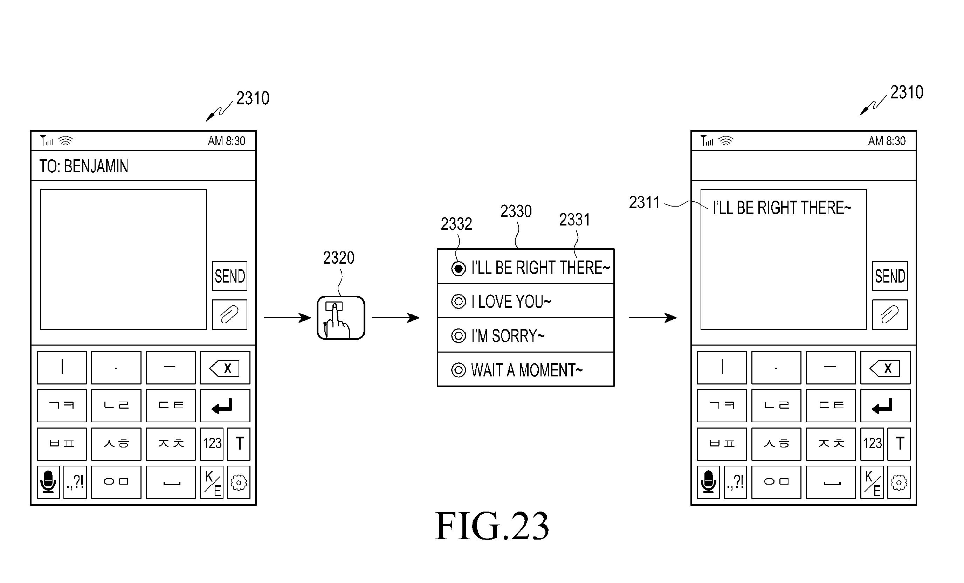

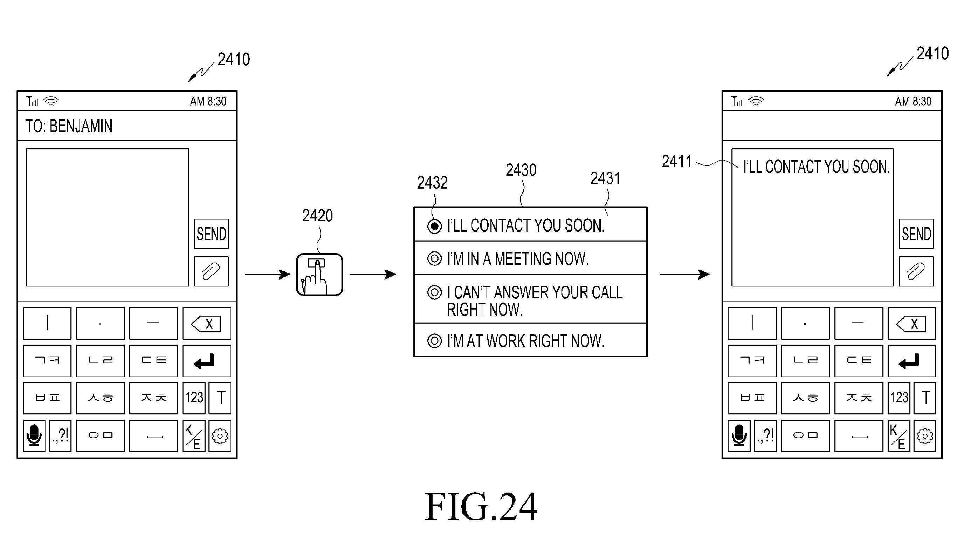

FIGs. 23 and 24 illustrate execution of object insertion function with fingerprint-based shortcut key input according to a second example of the present invention. In this example, the user sets a family sentence list for the fingerprint of the right middle finger and sets a business sentence list for the fingerprint of the right ring finger.

Referring now to FIG. 23, during execution of a document composition application 2310, the user inputs the fingerprint of the right middle finger as indicated by 2320, a detailed function list 2330 having items of "I'll be right there∼", "I love you", "I'm sorry", and "Wait a moment" is displayed as a window, and once the user selects the item 2331 "I'll be right there∼" by using a button 2332, the sentence "I'll be right there∼" is input to a message input window 2311.

Referring now to FIG. 24, when a document composition application 2410 is executed, the user inputs the fingerprint of the right ring finger as indicated by 2420, a detailed function list 2430 having items of "I'll contact you soon", "I'm in a meeting now", "I can't take your call right now", and "I'm at work right now" is displayed as a window. Once the user selects an item 2431 "I'll contact you soon" by using a button 2432, the sentence "'I'll contact you soon" is input to a message input window 2411.

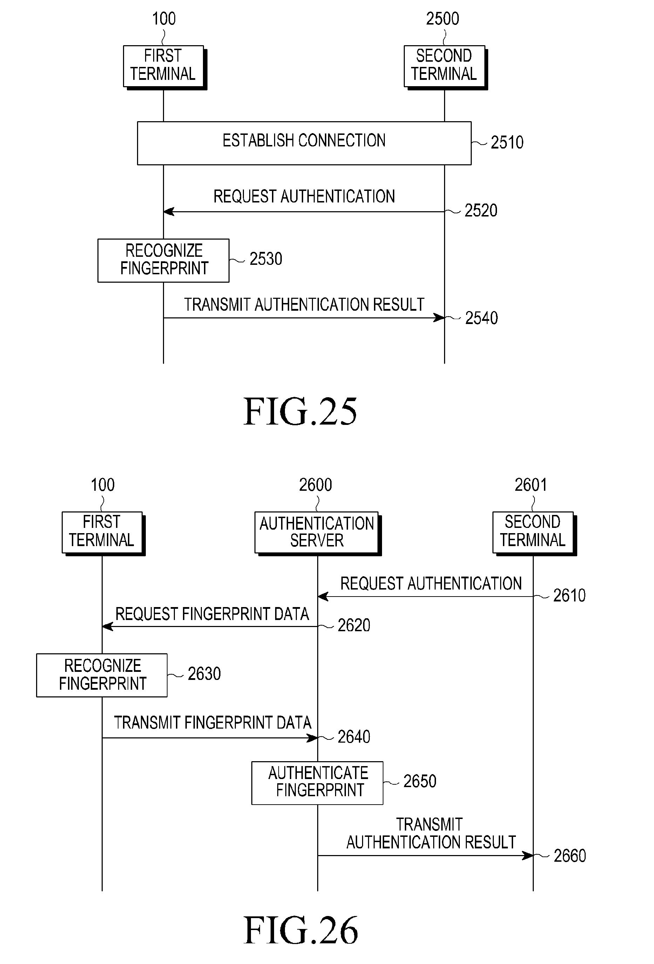

FIG. 25 illustrates execution of a personal authentication function with fingerprint-based shortcut key input according to the first example of the present invention.

Referring now to FIG. 25, a first terminal in this example is the portable terminal 100 shown in FIG. 1, and a second terminal 2500 is another portable terminal (which could be the external device).

In step S2510, a call connection between the first terminal 100 and the second terminal 2500 is established.

In step S2520, the second terminal 2500 requests the first terminal 100 to perform fingerprint-based security authentication.

In step S2530, the first terminal 100 determines whether a fingerprint input by the user is identical to a preset fingerprint.

In step S2540, the first terminal 100 transmits an authentication result to the second terminal 2500. In other words, if the input fingerprint is identical to the preset fingerprint, authentication is successful; otherwise, unless the input fingerprint is identical to the preset fingerprint, then authentication fails. Such an authentication result may be notified through a message, an alarm, or the like.

FIG. 26 is a diagram for describing execution of the personal authentication function with fingerprint-based shortcut key input according to the second example of the present invention.

Referring to FIG. 26, the first terminal 100 is a portable terminal shown in FIG. 1, and a second terminal 2601 is another portable terminal, and an authentication server 2600 is utilized.

In step S2610, the second terminal 2601 requests an authentication server 2600 to perform authentication on the first terminal 100.

In step S2620, the authentication server 2600 requests the first terminal 100 to provide fingerprint data.

In step S2630, the first terminal 100 receives input of a fingerprint from the user.

In step S2640, the first terminal 100 transmits the fingerprint data to the authentication server 2600 for authentication.

In step S2650, the authentication server 2600 determines whether the fingerprint data received from the first terminal 100 is identical to previously stored user fingerprint data of the first terminal 100.

In step S2660, the authentication server 2600 transmits an authentication result to the second terminal 2601. That is, if the received fingerprint data is identical to the previously stored fingerprint data, authentication is successful; otherwise, unless the received fingerprint data is identical to the previously stored fingerprint data, authentication fails. Such an authentication result may be notified through a message, an alarm, or the like.

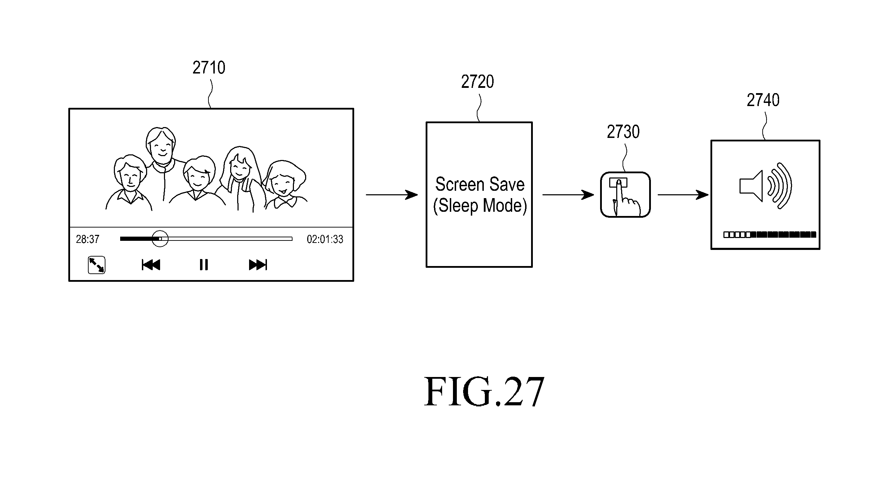

FIG. 27 illustrates execution of a multimedia control function with fingerprint-based shortcut key input according to the first example of the present invention.

During execution of a moving image application, a video player 2710, when a preset time passes where no user input is received, the portable terminal 100 enters into a sleep mode (or a screen saver mode) 2720. In the sleep mode 2720, the user inputs a fingerprint of the right index finger as indicated by 2730, such that a volume control menu 2740 is displayed. At this time, instead of the volume control menu 2740, a moving image-related menu such as a moving image list, a play menu, or the like may be displayed. Alternatively, if the user inputs a fingerprint of the right index finger in the sleep mode 2720 as indicated by 2730, volume up or volume down may be performed.

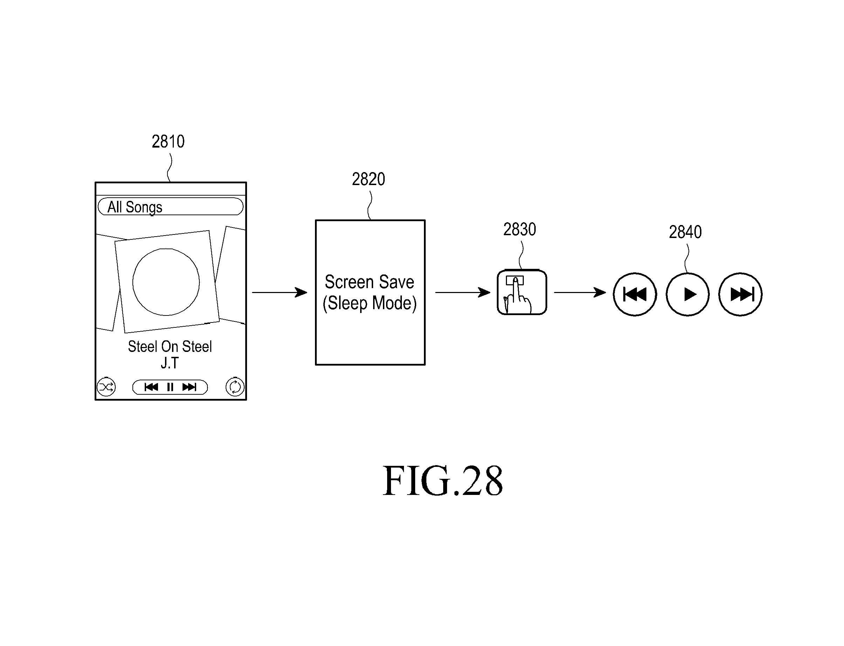

FIG. 28 illustrates execution of the multimedia control function with fingerprint-based shortcut key input according to the second example of the present invention.

During execution of a music application, a music player 2810, if no user input is received for a preset time, the portable terminal 100 enters a sleep mode 2820. In the sleep mode 2820, the user inputs a fingerprint of the right middle finger as indicated by 2830, such that a play menu 2840 is displayed. At this time, in place of the play menu 2840, a music-related menu such as a music list, a volume control menu, etc., may be displayed. If the user inputs the fingerprint of the right middle finger in the sleep mode 2820 as indicated by 2830, a control function such as rewind, fast forward, pause, play, or the like may be performed. Thus, due to the fingerprint recognition, with a single touch control functions are shown, yet with another finger, volume (mute functions) are shown.

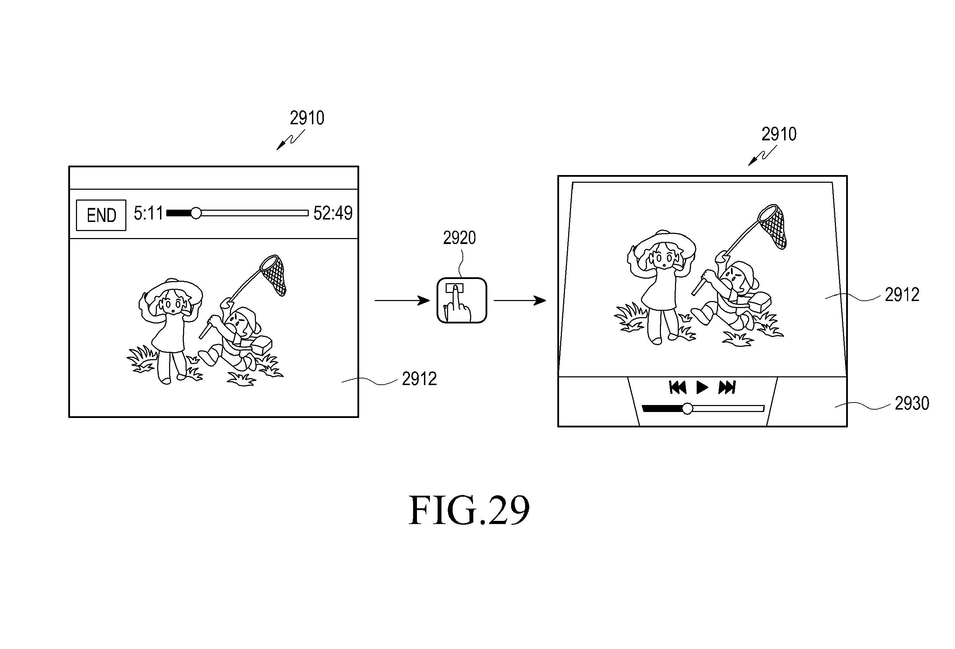

FIG. 29 illustrates execution of the multimedia control function with fingerprint-based shortcut key input according to a third example of the present invention.

Prior to fingerprint input as indicated by 2920, a video player 2910 displays only a contents window 2912. During execution of the video player 2910, the user inputs the fingerprint of the right middle finger as indicated by 2920, a play menu 2930 is displayed. The contents window 2912 is displayed on an upper portion of the video player 2910 and the play menu 2930 is displayed on a lower portion of the video player 2910. The display position of the play menu 2930 may vary according to a fingerprint input direction. For example, if the user inputs the fingerprint from bottom to top, the play menu 2930 may be displayed on the lower portion of the video player 2910; if the user inputs the fingerprint from top to bottom, the play menu 2930 may be displayed on the upper portion of the video player 2910. Likewise, if the user inputs the fingerprint from left to right, the play menu 2930 or a moving image list may be displayed on the left end portion of the video player 2910. Again, with a single touch a large number of options can be selected.

Creation of the play menu 2930 may be realized by a cubic screen change effect which rotates the virtual cube in which the contents window 2912 and the play menu 2930 are displayed on adjacent sides.

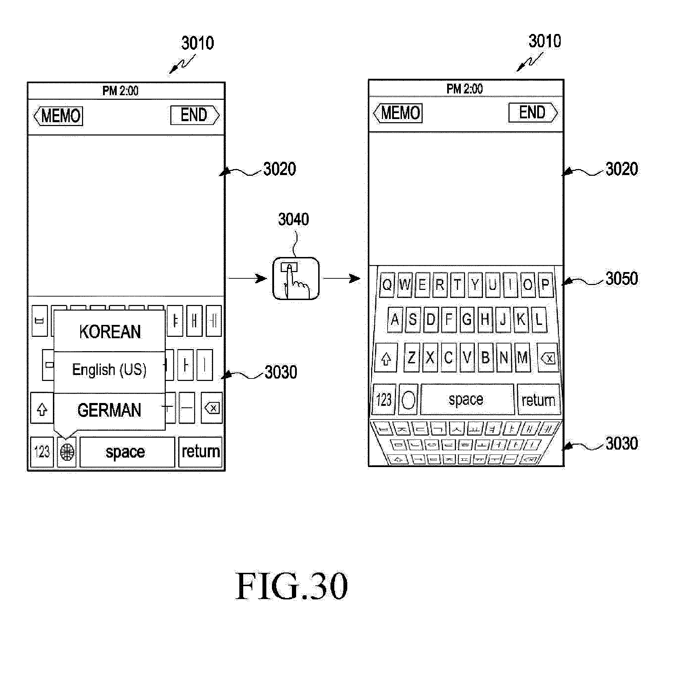

FIG. 30 illustrates execution of an input interface change function with fingerprint-based shortcut key input according to another example.

Prior to fingerprint input as indicated by 3040, a memo window 3020 is displayed on an upper portion of a memo application 3010, and an input interface 3030 is displayed on a lower portion of the memo application 3010.

For language conversion in conventional character input, a desired language has to be selected by inputting, for example, touching or clicking, a conversion button.

During execution of the memo application 3010, the user inputs the fingerprint of the right index finger as indicated by 3040, such that a new input interface 3050 is created. Prior to fingerprint input as indicated by 3040, a Korean input interface 3030, and after fingerprint input as indicated by 3040, an English input interface 3050 is displayed. Such input interface change may be realized by the cubic screen change effect which rotates the virtual cube in which a corresponding input interface is displayed on a corresponding side. Unlike in this example, input interface change may also be realized by a sliding screen change effect in which the English input interface 3050 gradually appears as sliding to the left (or to the right) or up (or down) and the Korean input interface 3030 gradually disappears as sliding to the left (or to the right) or up (or down). The direction of the input interface change may differ according to the fingerprint input direction. Hence, a new character input environment is provided. As is shown, the character input environment is an environment of conversion among a plurality of different languages. The languages include all existing languages such as Korean, English, Japanese, Chinese, French, Deutsch, and so forth.

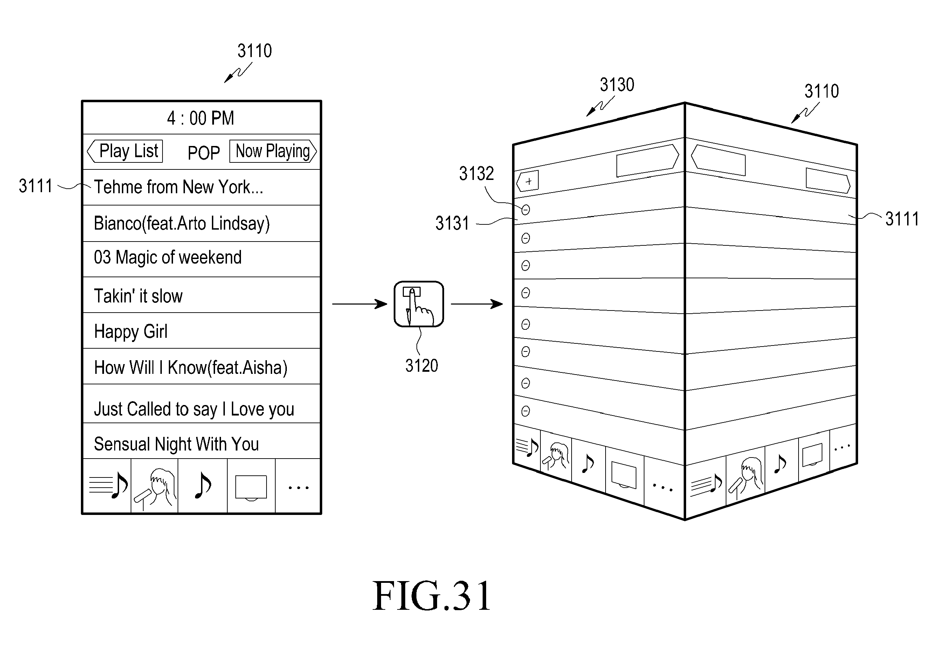

FIG. 31 illustrates execution of a mode change function with fingerprint-based shortcut key input according another example.

Prior to fingerprint input as indicated by 3120, a music application 3110 operates in a play mode which displays music items 3111 which cannot be edited.

During execution of the music application 3110, the user inputs the fingerprint of the right index finger as indicated by 3120, the music application 3130 operates in an edition mode in which music items 3131 which can be edited are displayed. The user may edit, such as delete or change, an item by clicking an edition button 3132 or the corresponding item.

The mode change may be realized by the cubic screen change effect which rotates the virtual cube in which a corresponding mode is displayed on a corresponding side. The direction of mode change may vary with the fingerprint input direction.

As described with reference to FIGs. 29 through 31, an interface of an application may be changed in a preset manner according to user's fingerprint input.

According to the present invention, a method for providing a fingerprint-based shortcut key, which can guarantee security and convenience, and a portable terminal implementing the method are provided.

The above-described methods according to the present invention can be implemented in hardware, firmware or as software or computer code that is stored on a non-transitory machine readable medium such as a CD ROM, a RAM, a floppy disk, a hard disk, or a magneto-optical disk or computer code downloaded over a network originally stored on a remote recording medium or a non-transitory machine readable medium and stored on a local non-transitory recording medium, so that the methods described herein are loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitutes hardware in the claimed invention. Under the broadest reasonable interpretation, the appended claims constitute statutory subject matter in compliance with 35 U.S.C. §101 and none of the elements consist of software per se.

The terms "unit" or "module" as may be used herein is to be understood as constituting hardware such as a processor or microprocessor configured for a certain desired functionality in accordance with statutory subject matter under 35 U.S.C. §101 and does not constitute software per se.

The portable terminal may receive and store a program comprising machine executable code that is loaded into hardware such as a processor and executed to configure the hardware, and the machine executable code may be provided from an external device connected in a wired or wireless manner. The device providing the machine executable code can include a non-transitory memory for storing the machine executable code that when executed by a processor will instruct the portable terminal to execute a preset fingerprint-based shortcut key providing method, information necessary for the fingerprint-based shortcut key providing method, and so forth, a communication unit for performing wired or wireless communication with the host, and a controller for transmitting a corresponding program to the host at the request of the host device or automatically.

While the present invention has been particularly shown and described with reference to exemplary embodiments thereof, various changes in form and detail may be made therein without departing from the spirit and scope of the present invention as defined by the following claims. Accordingly, the scope of the present invention will be defined by the appended claims and equivalents thereto.

## Claims

1. A portable terminal which provides a fingerprint-based shortcut key, the portable terminal comprising:
a fingerprint sensor (180) for recognizing user's fingerprint;
a memory (120) for storing fingerprint data; and
a controller (190) configured for mapping and storing a first fingerprint data inputted through the fingerprint sensor and an associated function of the portable terminal in the memory, and upon input of a second fingerprint data through the fingerprint sensor, controlling comparing the first fingerprint data with the second fingerprint data, and performing the associated function mapped to the first fingerprint data when the comparing indicates the first fingerprint data is identical to the second fingerprint data.

2. The portable terminal of claim 1, wherein the fingerprint data comprises fingerprint pattern information and fingerprint input direction information, and wherein at least two fingers each provide first fingerprint data that is individually identified as belonging to a certain position of a finger on the left or right hand, each one of the at least two fingers being respectively associated with different functions mapped thereto.

3. The portable terminal of claim 1 or 2, wherein the associated function of the portable terminal (100) comprises one of an unlock function, an application execution function, an application sorting function, a Subscription Identification Module switching function, a user account change function, an Operating System change function, an object insertion function, a personal authentication function, a multimedia control function, an input interface change function, or a mode change function.

4. The portable terminal of any one of claims 1 to 3, wherein if the second fingerprint data which is identical to the first fingerprint data is input when the portable terminal is locked, the controller performs the mapped function simultaneously while unlocking the portable terminal.

5. The portable terminal of any one of claims 1 to 4, wherein when the second fingerprint data which is identical to the first fingerprint data is input, the controller displays a detailed function list (500) comprising a plurality of function items on a display unit (150) of the portable terminal (100) and performs a function corresponding to a function item selected by the user from among the plurality of function items.

6. The portable terminal of any one of claims 1 to 5, wherein if the second fingerprint data which is identical to the first fingerprint data is input, the controller displays a screen which allows communication with contact information mapped to the first fingerprint data on a display unit (150) of the portable terminal (100).

7. The portable terminal of any one of claims 1 to 6, wherein if the second fingerprint data which is identical to the first fingerprint data is input, the controller displays a folder mapped to the first fingerprint data on a display unit (150) of the portable terminal (100).

8. The portable terminal of any one of claims 1 to 7, wherein if the second fingerprint data which is identical to the first fingerprint data is input, the controller displays an interface of an application mapped to the first fingerprint data data on a display unit (150) of the portable terminal (100).

9. A method for providing a fingerprint-based shortcut key in a portable terminal, the method comprising:
receiving an input of first fingerprint data;
mapping and storing the first fingerprint data and an associated function of the portable terminal in a memory;
receiving an input of second fingerprint data;
comparing the first fingerprint data with the second fingerprint data; and
when the first fingerprint data is identical to the second fingerprint data performing the function mapped to the first fingerprint data.

10. The method of claim 9, wherein the fingerprint data comprises fingerprint pattern information and fingerprint input direction information.

11. The method of claim 9 or 10, further comprising performing the mapped function simultaneously while unlocking the portable terminal (100), when the second fingerprint data which is identical to the first fingerprint data is input when the portable terminal is locked.

12. The method of any one of claims 9 to 11, further comprising displaying , on a display unit (150) of the portable terminal (100), a detailed function list (500, 600, 700, 800, 900, 1000, 1100, 1200) comprising a plurality of function items that are associated with a function list (400) and performing a function corresponding to a function item selected by the user from among the plurality of function items, when the second fingerprint data which is identical to the first fingerprint data is input.

13. The method of any one of claims 9 to 12, further comprising displaying an interface of an application mapped to the first fingerprint data on a display unit (150) of the portable terminal (100), if the second fingerprint data which is identical to the first fingerprint data is input.

14. The method of any one of claims 9 to 13, further comprising displaying a folder mapped to the first fingerprint data on a display unit (150) of the portable terminal (100), when it is determined that the second fingerprint data which is input is identical to the first fingerprint data.

15. A computer-readable recording medium having recorded thereon a machine executable code that is loaded into a controller or processor for executing a method for providing a fingerprint-based shortcut key in a portable terminal according to any one of claims 9 through 14.
